(19) Europäisches Patentamt / European Patent Office / Office européen des brevets

(11) **EP 4 103 131 B1**

(12) **FASCICULE DE BREVET EUROPEEN**

(45) Date de publication et mention de la délivrance du brevet:
**03.01.2024 Bulletin 2024/01**

(21) Numéro de dépôt: **21709075.2**

(22) Date de dépôt: **10.02.2021**

(51) Classification Internationale des Brevets (IPC):
***A61H 1/02*** *(2006.01)*

(52) Classification Coopérative des Brevets (CPC):
**A61H 1/0237;** A61H 2201/165; A61H 2201/5007;
A61H 2201/501

(86) Numéro de dépôt international:
**PCT/FR2021/050242**

(87) Numéro de publication internationale:
**WO 2021/160967 (19.08.2021 Gazette 2021/33)**

(54) **PROCEDES DE GENERATION D'UNE TRAJECTOIRE D'UN EXOSQUELETTE ET DE MISE EN MOUVEMENT DE L'EXOSQUELETTE**

VERFAHREN ZUR ERZEUGUNG EINER TRAJEKTORIE EINES EXOSKELETTS UND ZUR EINSTELLUNG DES EXOSKELETTS IN BEWEGUNG

METHODS FOR GENERATING A TRAJECTORY OF AN EXOSKELETON AND FOR SETTING THE EXOSKELETON IN MOTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.02.2020 FR 2001317**

(43) Date de publication de la demande:
**21.12.2022 Bulletin 2022/51**

(73) Titulaire: **Wandercraft**
**75004 Paris (FR)**

(72) Inventeurs:
• **BROSSETTE, Stanislas**
**75008 PARIS (FR)**
• **BOERIS, Guilhem**
**75011 PARIS (FR)**

(74) Mandataire: **Regimbeau**
**20, rue de Chazelles**
**75847 Paris Cedex 17 (FR)**

(56) Documents cités:
EP-A1- 1 504 858          EP-A2- 1 510 446
EP-B1- 1 510 446          WO-A2-2010/027968
KR-A- 20170 008 941

EP 4 103 131 B1

## Description

DOMAINE TECHNIQUE GENERAL

La présente invention concerne le domaine des robots de type exosquelette.

Plus précisément, elle concerne un procédé de génération d'une trajectoire d'un exosquelette et un procédé de mise en mouvement de l'exosquelette.

ETAT DE L'ART

Récemment, sont apparus pour les personnes avec des problèmes de mobilité importants comme les paraplégiques des dispositifs de marche assistée appelés exosquelettes, qui sont des dispositifs robotisés externes que l'opérateur (l'utilisateur humain) vient « enfiler » grâce à un système d'attaches qui lie les mouvements de l'exosquelette de ses propres mouvements. Les exosquelettes de membres inférieurs disposent de plusieurs articulations, généralement au moins au niveau des genoux et des hanches, pour reproduire le mouvement de marche. Des actionneurs permettent de mouvoir ces articulations, qui à leur tour font se mouvoir l'opérateur. Un système d'interface permet à l'opérateur de donner des ordres à l'exosquelette, et un système de commande transforme ces ordres en commande pour les actionneurs. Des capteurs viennent généralement compléter le dispositif.

Ces exosquelettes constituent une avancée par rapport aux fauteuils roulants, car ils permettent aux opérateurs de se remettre debout et de marcher. Les exosquelettes ne sont plus limités par les roues et peuvent théoriquement évoluer dans la majorité des environnements non plats : les roues, au contraire des jambes, ne permettent pas de franchir des obstacles importants comme des marches, escaliers, obstacles d'une hauteur trop importante, etc.

Cependant, dans leur usage, aucun de ces exosquelettes ne réalise une marche humaine autonome, i.e. stable et viable sur une large variété de terrains, anthropomorphe, non assistée.

Dans la plupart des cas, ces limitations se matérialisent par l'impossibilité pour le dispositif de gérer l'équilibre ou la direction de marche par lui-même. Ces deux tâches sont alors généralement transférées à l'opérateur, qui les réalise grâce à des béquilles, comme proposé par exemple dans le brevet US7153242 de Rewalk, ou dans la demande US2016038371 de Ekso-Bionics. Un autre exemple d'exosquelette pour les membres inférieurs est connu dans le document WO2010027968 A2.

Le brevet EP2231096 de Rex-Bionics décrit le seul exosquelette utilisable sans aide extérieure pour une personne incapable d'assurer sa propre stabilité. Le principe de contrôle, décrit au paragraphe [0122], explicite clairement le besoin de transférer le centre de pression (le point physique auquel le moment des forces de réaction exercées par le sol sur le système est nul) d'une partie du polygone de support (l'enveloppe convexe des points de contact avec le sol) vers une autre partie du polygone de support.

Cette limitation impose une marche extrêmement lente (quelques mètres par minute, alors qu'une marche normale dépasse 2 km/h soit 33 mètres par minutes) avec des pas courts (moins de 30 cm, alors qu'une foulée normale va de 50 à 80 cm), durant laquelle le pied d'appui est constamment en contact plan avec le sol. Le type d'environnement accessible est donc limité, puisque les terrains accidentés sont exclus de fait. De même, le moindre obstacle comme un caillou, un petit objet, génère un risque de déséquilibrer le système s'il pose son pied dessus à un moment donné, et finalement de le faire tomber.

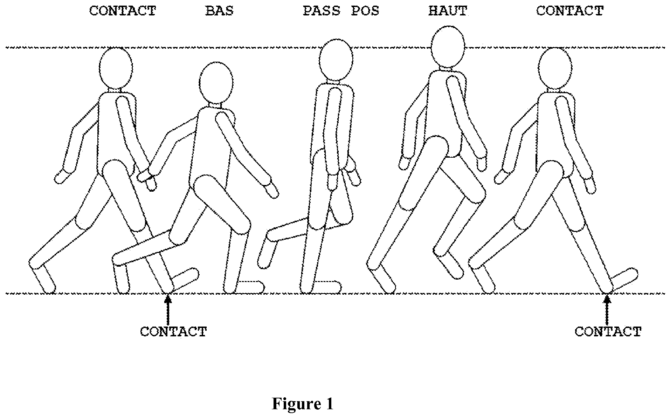

Par opposition, la marche humaine « naturelle » se caractérise par une succession de phases au cours desquelles les pieds peuvent être à plat au sol, en l'air, ou en train de rouler sur le sol, comme l'on voit sur la **Figure 1.** Cette capacité à dérouler le pied est primordiale pour la marche car elle permet de faire des pas plus grands et permet une stabilité sur une grande variété de terrains.

Or les exosquelettes dits de première génération décrits précédemment n'ont pas de pied actionné ou gardent le pied d'appui au sol.

Réaliser ce déroulé est en effet complexe pour des robots humanoïdes bipèdes ou des dispositifs robotisés. Même si on prévoit une structure de pied avec cassure comme proposé dans la demande WO2015140353, lorsque le centre de pression atteint la limite du polygone de support, le système commence à rouler autour de ce point, et n'est donc plus en équilibre statique.

Dans le cas de la marche, le déroulé du pied implique une perte de contact partielle avec le sol au niveau du pied d'appui, avec plusieurs conséquences :

- le polygone de support (la surface de sustentation) est réduit, potentiellement à un point, rendant difficile voire impossible de maintenir le centre de pression à l'intérieur du polygone de support ;
- le système est dans une situation de sous-actionnement, c'est-à-dire qu'il ne peut plus agir sur l'ensemble de ses degrés de liberté. Tous les mouvements ne sont plus alors possibles.

Dans une telle situation, les formalismes classiques de la marche à pieds plats tels que décrits dans le document Kajita S., K. F. (2003). Biped Walking pattern génération by using preview control of Zero-Moment Point. ICRA, (pp. 1620-1626), ou le principe décrit dans le brevet Rex-Bionics EP2231096 ne peuvent plus fonctionner.

Une idée naturelle est d'amener la jambe balançant devant et de poser le deuxième pied par terre pour retrouver un polygone de support et l'équilibre, ceci alors que le système est en libre rotation autour du pied d'appui, en quelque sorte en train de « tomber ». On parle alors de marche dynamique, puisque le corps passe par une succession de postures instables, mais uniquement de façon transitoire (si on « arrêtait » la personne en pleine foulée elle tomberait).

Dans cette approche de la marche dynamique, amener le pied balançant rapidement dans une position qui rétablisse au moins brièvement l'équilibre est compliqué. En effet, si on fait suivre à ce pied une trajectoire paramétrée en temps pré-calculée, ce pied risque de frapper le sol trop tôt ou trop tard dû au comportement incontrôlable du système sous-actionné même soumis à de légères perturbations (on ne peut pas corriger une trajectoire qui dévierait légèrement de ce qui a été planifié). Cela peut générer de l'inconfort à l'opérateur, le déséquilibrer voir même le faire tomber, y compris sur des terrains simples.

C'est pour cela que tous les exosquelettes de première génération (et nombre de robots humanoïdes) essayent d'éviter ce genre de situation en gardant le pied d'appui à plat, avec pour conséquences les limitations susmentionnées sur la vitesse de marche, la longueur des pas, le type de terrain admissible et la stabilité générale de la marche.

Il a été par conséquent proposé dans la demande WO2018130784 un nouveau paradigme de marche pour les exosquelettes, combinant les principes de « contraintes virtuelles » et de « Dynamique des Zéro Hybride » (HZD) permettant une marche rapide, naturelle, et sans risque de chute ou de déséquilibre même en terrain difficile et imprévu.

De façon traditionnelle, les trajectoires, c'est-à-dire les évolutions de chaque degré de liberté, sont exprimées en fonction du temps. La « dynamique » du système est définie par une fonction

$$f : \chi \times U \times R^+ \mapsto \chi$$

et un point de départ

$$\xi \in \chi$$

la fonction f s'écrivant

$$\acute{x}_t = f(x_t, u_t, t), x_0 = \xi$$

$\chi$ étant l'espace d'état de l'exosquelette 1, U l'espace de contrôle, et $t$ représentant le temps.

La HZD est au contraire la dynamique des degrés de liberté non-actionnés. Cette dynamique est dite est dite « Zéro » puisqu'elle correspond aux degrés sur lesquels la commande ne peut/veut pas agir, i.e. la commande vaut 0, et « Hybride » car l'impact du pied sur le sol impose des phases instantanées discontinues qui entrecoupent les phases continues.

En méthode dite des « contraintes virtuelles », le principe est de définir pour une sélection des degrés de liberté actionnés une trajectoire paramétrée par un paramètre d'évolution non pas en temps, mais en fonction directement de la configuration, ce paramètre étant nommé variable de phase. Un exemple d'une telle variable de phase est l'angle entre l'axe talon-hanche et la verticale qui constitue alors un degré de liberté non-actionné mentionné ci-avant.

La variable de phase permet de définir « l'avancement » d'un pas. Plus précisément, à chaque pas, la variable de phase passe continûment d'une valeur initiale à une valeur finale, avant de se voir réaffecter la valeur initiale : c'est le début du pas suivant. Pour faciliter les choses, on peut normaliser la valeur du paramètre de phase entre 0 et 1.

A chaque valeur du paramètre d'évolution correspond une valeur des degrés de liberté actionnés que le système doit s'efforcer de suivre : ce sont ces relations (une pour chaque degré de liberté actionné que l'on souhaite contrôler de cette manière) qu'on nomme contraintes virtuelles.

Si le système suit exactement cette trajectoire pour les degrés de liberté sur lesquels on peut ou l'on veut agir, en d'autres termes si les contraintes virtuelles sont respectées pour ces degrés de liberté, alors l'évolution du système est totalement déterminée par celle des degrés de liberté non-actionnés qui suivent leur propre dynamique qui est la HZD.

Un bon choix des contraintes virtuelles peut ainsi amener cette dynamique à contenir une « orbite » périodique attractive, i.e. une trajectoire stable vers laquelle le système est attiré naturellement.

Cette méthode HZD apporte grande satisfaction, mais la difficulté réside dans la génération des trajectoires (c'est d'ailleurs également le cas dans la méthode « pieds plats »). En effet, on constate que les trajectoires obtenues « roulent peu » le pied, i.e. le pied reste quasiment horizontal (le talon et les orteils décollent peu du sol) contrairement à la marche humaine naturelle représentée par la figure 1 évoquée ci-avant dans laquelle le déroulé est marqué.

Pourtant, ces algorithmes de génération de trajectoire permettent en théorie parfaitement une phase de déroulé aussi marquée que dans une marche humaine naturelle, mais du fait qu'ils reposent généralement sur une méthode d'optimisation pour problèmes non-convexes non-linéaires sous contraintes, ils favorisent des trajectoires « optimales » considérées plus stables au détriment des trajectoires plus « anthropomorphiques », qui seraient pourtant largement préférées par les opérateurs humains des exosquelettes.

Ainsi, il serait souhaitable de disposer d'une nouvelle solution de génération de trajectoires qui augmente le côté naturel des trajectoires sans nuire à leur stabilité.

PRESENTATION DE L'INVENTION

La présente invention se rapporte ainsi selon un premier aspect à un procédé de génération d'une trajectoire d'un exosquelette pourvu de deux jambes chacune munie d'un pied, le procédé comprenant la mise en oeuvre par des moyens de traitement de données d'un serveur, d'étapes de :

(a) obtention d'au moins un n-uplet de paramètres de marche définissant une marche donnée de l'exosquelette ;
(b) génération d'au moins une trajectoire élémentaire périodique de l'exosquelette pour ledit n-uplet de paramètres de marche, telle que ladite trajectoire élémentaire périodique comprend successivement une première partie de trajectoire et une deuxième partie de trajectoire, telle que dans la première partie de trajectoire chaque pied effectue une rotation pure, et dans la deuxième partie un seul pied effectue une translation.

Selon des caractéristiques avantageuses et non-limitatives :
Ladite trajectoire périodique élémentaire répète cycliquement la succession desdites première partie de trajectoire puis deuxième partie de trajectoire.

Dans la deuxième partie de trajectoire, le pied qui effectue la translation est le pied initialement arrière, le pied initialement avant effectuant une rotation pure.

Ledit pied initialement avant reste immobile pendant la deuxième partie de trajectoire.

A l'issue de première partie de trajectoire le pied avant est à plat au sol.

L'étape (b) est mise en oeuvre en utilisant au moins un réseau de neurones.

Ledit exosquelette recevant un opérateur humain, l'étape (a) comprenant la détermination d'une séquence de n-uplets de paramètres de marche de l'exosquelette souhaitée par ledit opérateur.

La trajectoire générée de l'exosquelette comprend, pour chaque n-uplet de ladite séquence, une nouvelle trajectoire périodique élémentaire et une transition vers cette nouvelle trajectoire périodique élémentaire.

Selon un deuxième aspect, l'invention concerne un procédé de mise en mouvement d'un exosquelette présentant une pluralité de degrés de liberté dont au moins un degré de liberté actionné par un actionneur commandé par des moyens de traitement de données comprenant une étape (c) d'exécution par les moyens de traitement de données de l'exosquelette d'une trajectoire de l'exosquelette générée au moyen du procédé de génération d'une trajectoire de l'exosquelette selon le premier aspect, de sorte à faire marcher ledit exosquelette.

Selon un troisième aspect, l'invention concerne un système comprenant un premier serveur et un exosquelette comprenant chacun des moyens de traitement de données, caractérisé en ce que lesdits moyens de traitement de données sont configurés pour mettre en oeuvre un procédé selon le premier aspect de génération d'une trajectoire de l'exosquelette et/ou un procédé selon le deuxième aspect de mise en mouvement d'un exosquelette.

Selon un quatrième et un cinquième aspect, l'invention concerne un produit programme d'ordinateur comprenant des instructions de code pour l'exécution d'un procédé selon le premier aspect de génération d'une trajectoire d'un exosquelette et/ou un procédé selon le deuxième aspect de mise en mouvement d'un exosquelette ; et un moyen de stockage lisible par un équipement informatique sur lequel un produit programme d'ordinateur comprend des instructions de code pour l'exécution d'un procédé selon le premier aspect de génération d'une trajectoire d'un exosquelette et/ou un procédé selon le deuxième aspect de mise en mouvement d'un exosquelette.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 illustre la marche humaine ;
- la figure 2 est un schéma d'un exosquelette utilisé par les procédés selon l'invention ;
- la figure 3 est un schéma d'une architecture pour la mise en oeuvre des procédés selon l'invention ;
- la figure 4 est un diagramme illustrant la structure du problème d'optimisation décrivant l'ensemble des phases d'une trajectoire de marche avec déroulé de pied de l'exosquelette dans un exemple de mode de réalisation de l'invention.

DESCRIPTION DETAILLEE

*Architecture*

Selon deux aspects complémentaires de l'invention, sont proposés :

- un procédé de génération d'une trajectoire d'un exosquelette 1 ; et
- un procédé de mise en mouvement d'un exosquelette 1 (appliquant une trajectoire générée grâce au procédé selon le premier aspect).

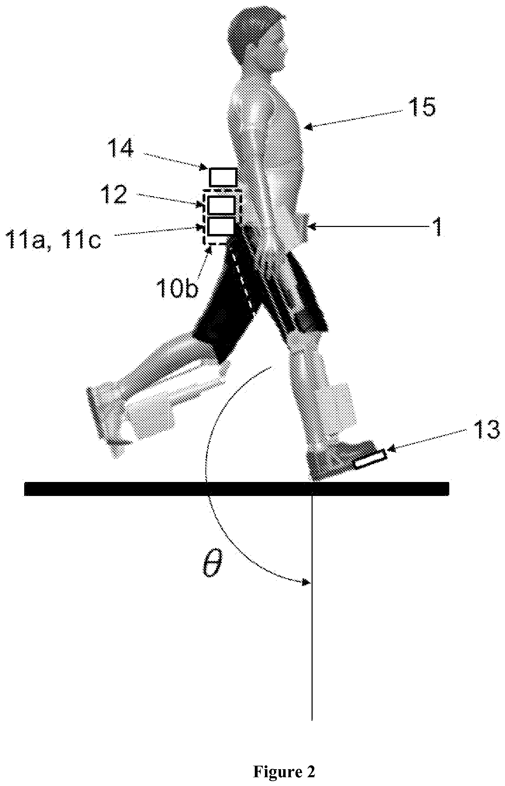

En référence à la **Figure 2,** ledit exosquelette 1 est un système mécanique articulé de type dispositif robotisé bipède, actionné et commandé, pourvu de deux jambes, accueillant plus précisément un opérateur humain présentant ses membres inférieurs chacun solidaires d'une jambe de l'exosquelette 1 (notamment grâce à des sangles). Il peut ainsi être un robot plus ou moins humanoïde. Par « marche », on entend ici la mise en mouvement du dispositif robotisé 1, qui se traduit en pratique par en appui alternatif sur les jambes, en position debout, de sorte à produire un déplacement.

L'exosquelette 1 présente une pluralité de degrés de liberté, c'est-à-dire d'articulations déformables (généralement via une rotation) c'est-à-dire mobiles les unes par rapport aux autres, qui sont chacun soit « actionné », soit « non-actionné ».

Un degré de liberté actionné désigne une articulation pourvue d'un actionneur commandé par des moyens de traitement de données 11c, c'est-à-dire que ce degré de liberté est contrôlé et que l'on peut agir dessus. Au contraire un degré de liberté non actionné désigne une articulation dépourvue d'actionneur, c'est-à-dire que ce degré de liberté suit sa propre dynamique et que les moyens de traitement de données 11 n'ont pas de contrôle direct dessus (mais a priori un contrôle indirect via les autres degrés de liberté actionnés). Dans l'exemple de la figure 1, le contact talon-sol est ponctuel, et l'exosquelette 1 est ainsi libre en rotation par rapport à ce point de contact. L'angle entre l'axe talon-hanche et la verticale constitue alors un degré de liberté non-actionné.

Le présent exosquelette comprend naturellement au moins un degré de liberté actionné, préférentiellement une pluralité, et également au moins un degré de liberté non actionné, c'est-à-dire qu'il est dit « sous-actionné », comme évoqué précédemment. On appelle degré de sous-actionnement le nombre de degrés de liberté non-actionnés.

Les moyens de traitement de données 11c désignent un équipement informatique (typiquement un processeur, soit externe si l'exosquelette 1 est « télécommandé » mais préférentiellement embarqué dans l'exosquelette 1, voir plus loin) adapté pour traiter des instructions et générer des commandes à destination des différents actionneurs. Ces derniers peuvent être électriques, hydrauliques, etc.

La présente demande ne sera limitée à aucune architecture d'exosquelette 1, et on prendra l'exemple tel que décrit dans les demandes WO2015140352 et WO2015140353.

Ainsi, de façon préférée et conformément à ces demandes, l'exosquelette 1 comprend sur chaque jambe une structure de pied comprenant un plan de support sur lequel un pied d'une jambe de la personne portant l'exosquelette peut venir en appui.

Ce plan de support comprend une plate-forme avant et une plate-forme arrière, telles qu'une liaison pivot pied relie la plate-forme avant à la plate-forme arrière, en constituant un degré de liberté non actionné.

L'homme du métier saura toutefois adapter le présent procédé à toute autre architecture mécanique.

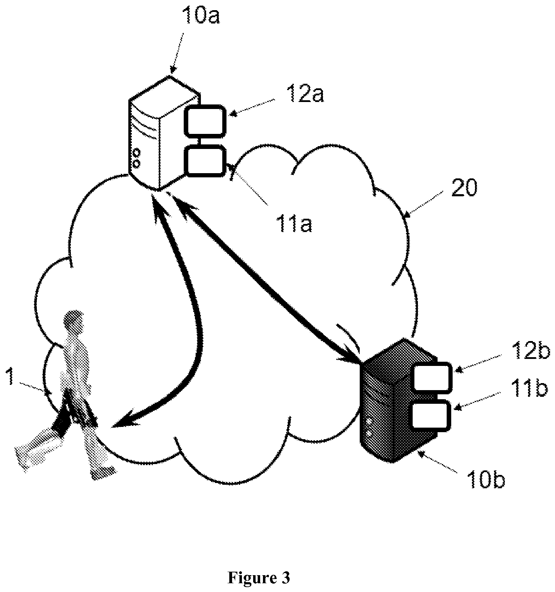

Selon un mode de réalisation préféré, les présents procédés de génération de trajectoire et de marche peuvent impliquer un premier voire un deuxième serveur 10a, 10b au sein d'une architecture telle que représentée par la **Figure 3**.

Le premier serveur 10a est un serveur de génération de trajectoire, et le deuxième serveur 10b est un éventuel serveur d'apprentissage.

En effet, la génération d'une trajectoire de l'exosquelette 1 peut utiliser un réseau de neurone, en particulier de type « à propagation avant » (FNN, « Feedforward Neural Network »), comme cela est proposé dans la demande FR1910649. Le deuxième serveur 10b est alors un serveur pour la mise en oeuvre d'un procédé d'apprentissage de paramètres dudit réseau de neurones. A noter que le présent procédé n'est pas limité à l'utilisation d'un réseau de neurones, et on pourra utiliser toute technique connue de génération de la trajectoire dans sa globalité, voire plus loin.

Dans tous les cas, il est tout à fait possible que ces deux serveurs soient confondus, mais en pratique le deuxième serveur 10b est le plus souvent un serveur distant alors que le premier serveur 10a peut être embarqué par l'exosquelette 1 pour fonctionnement en temps réel, comme cela est représenté par la figure 2. Selon un mode de réalisation préféré, le premier serveur 10a met en oeuvre le procédé de génération d'une trajectoire de l'exosquelette 1 grâce à un réseau de neurones utilisant les paramètres récupérés depuis le second serveur 10b, et l'exosquelette 1 applique directement ladite trajectoire générée in situ pour se mettre en mouvement.

Chacun de ces serveurs 10a, 10b est typiquement un équipement informatique relié à un réseau étendu 20 tel que le réseau internet pour l'échange des données, même si en pratique une fois le réseau de neurone appris et embarqué sur le deuxième serveur 10b la communication peut être interrompue, du moins par intermittence. Chacun comprend des moyens de traitement de données 11a, 11b de type processeur (en particulier les moyens de traitement de données 11b du deuxième serveur ont une forte puissance de calcul, car l'apprentissage est long et complexe par rapport à la simple utilisation du réseau de neurones appris), et le cas échéant des moyens de stockage de données 12a, 12b telle qu'une mémoire informatique, par exemple un disque dur. Dans le cas d'une génération de trajectoire par réseau de neurones, une base de données d'apprentissage peut être stockée par la mémoire 12b du deuxième serveur 10b.

On comprendra qu'il peut y avoir une pluralité d'exosquelettes 1 embarquant chacun leur premier serveur 10a (qui peut alors être de puissance et d'encombrement limité, dans la mesure où il ne génère de trajectoires que pour l'exosquelette 1 auquel il est dédié), ou bien une pluralité d'exosquelettes 1 connectés chacun à un premier serveur 10a plus puissant et éventuellement confondu avec le second serveur 10b (et ayant la capacité de générer des trajectoires à la volée pour tous les exosquelettes 1).

*Principe de l'invention*

Comme expliqué, on entend classiquement par « trajectoire » de l'exosquelette les évolutions de chaque degré de liberté (en particulier actionné) exprimées en fonction du temps ou d'une variable de phase.

Par ailleurs, on sait définir une trajectoire « complexe » comme une séquence de trajectoires périodiques dites « élémentaires » entrecoupées de transitions. Par trajectoire périodique, on entend toute trajectoire appliquée (le cas échéant de manière répétée) sur la durée d'un pas de sorte que partant d'un état initial de l'exosquelette 1 au début d'un pas (moment de contact du pied), on retourne au même état au début du pas suivant (comme expliqué cela englobe toute marche à plat, mais également sur rampe, une montée ou descente d'un escalier, etc.). On dit également que la trajectoire périodique forme un « cycle limite ». Ainsi, ladite trajectoire périodique peut être appliquée sur n'importe quel nombre de pas de manière stable.

En d'autres termes, chaque trajectoire élémentaire est associée à une marche donnée de l'exosquelette 1 (une marche étant définie par un n-uplet de paramètres de marche), et permet de maintenir cette marche de manière stable et faisable (i.e. comme on le verra respecte toutes les contraintes d'un problème d'optimisation et minimise autant que possible une fonction de coût). Comme expliqué, lesdits paramètres de marche correspondent à des « caractéristiques » de la façon de marcher, telles que la longueur des pas, la fréquence de marche et l'inclinaison du buste, mais également hauteur des marches en cas de franchissement d'escaliers, l'angle de rotation instantané pour les mouvements courbes ; et également à des caractéristiques morphologiques de l'opérateur (un sous-groupe des paramètres de marche dits paramètres patient) telles que sa taille, son poids, la longueurs des cuisses ou des tibia, la position du centre de masse (valeur du décalage vers l'avant) et le débattement latéral du buste dans le cadre d'activité de rééducation.

Lesdites « contraintes » d'une marche évoquées ci-avant peuvent être variées et dépendre du type de marche souhaitée, par exemple une marche « pied plat », ou « HZD ». Le présent procédé ne sera limité à aucun type de marche souhaité.

Les transitions correspondent à des changements de marche, i.e. des variations de valeurs desdits paramètres de marche (par exemple une augmentation de la longueur de pas) : connaissant un jeu initial de paramètres de marche et un jeu final de paramètres de marche, et donc une trajectoire périodique initiale (associée au jeu initial de paramètres de marche) et une trajectoire périodique finale (associée au jeu final de paramètres de marche), ladite transition est un fragment de trajectoire permettant de passer de la trajectoire périodique initiale à la trajectoire finale. On note qu'il faut y avoir des transitions « initiale » ou « finale », comme l'on verra plus loin.

L'astuce à la base du présent procédé est de remarquer que l'on peut imposer dans une trajectoire élémentaire périodique deux sous-parties de sorte à la rendre plus clairement anthropomorphique. Dans une première partie de la trajectoire dite « roll » les deux pieds sont au contact du sol et effectuent chacun un mouvement de rotation pure : le pied arrière (en contact au niveau d'au moins la « pointe » - typiquement une plateforme avant de la structure de pied - et avantageusement initialement en contact complet, c'est-à-dire à plat) lève progressivement le talon et le pied avant (en contact seulement au niveau du talon) pose progressivement la pointe (deux premières images de la figure 1), puis dans une deuxième partie dite « swing » ou juste « step », le pied avant reste en contact du sol et l'autre décolle (on parle de « foot clearance ») et effectue un mouvement de translation (qui peut bien entendu inclure diverses rotations) : en d'autres termes, ce pied initialement arrière rompt le contact avec le sol, passe devant et retrouve le contact au sol avec le talon (trois dernières images de la figure 1). A ce stade les deux pieds sont au contact du sol de manière inversée à ce qui était le cas au début de la première partie (le pied arrière est devenu le pied avant), mais dans une configuration identique (le pied arrière est en contact au niveau de la pointe voire à plat, et le pied avant est en contact seulement au niveau du talon) : un pas a été fait et on peut recommencer une première et une deuxième partie de manière symétrique, et ainsi de suite (d'où le caractère « élémentaire périodique » de la trajectoire).

On note que la notion de « avant » et « arrière » est définie par rapport à la direction de la marche : il y a toujours un pied avant et un pied arrière, ceux-ci s'inversant à chaque pas.

Ainsi, chaque trajectoire périodique élémentaire est construite à partir d'une première partie et d'une deuxième partie, l'enchainement de la première partie et de la deuxième partie constituant un cycle qu'on peut répéter (en inversant pied gauche et pied droit à chaque cycle).

On peut imposer l'existence de ces première et deuxièmes parties en rajoutant des conditions lors de la génération de trajectoire, et en appliquant la continuité des paramètres de trajectoire d'une partie à une autre. Ces conditions sont avantageusement les suivantes :

- Pour la première partie, rotation pure de chaque pied (voire rotation selon un seul axe de rotation), et préférentiellement le pied avant est à plat à la fin de la première partie ;
- Pour la deuxième partie, décollement et translation du seul pied (initialement) arrière, jusqu'à ce qu'il touche à nouveau le sol (en devenant le nouveau pied avant, d'où le mot « initialement »), pendant ce temps rotation pure du pied (initialement) avant, voire pied avant immobile.

On remarque que ce découpage en deux parties n'est pas ce que fait réellement un humain, les deux parties existent en effet dans la marche humaine réelle sans être pour autant aussi distinctes (une partie de la rotation du pied avant est concomitante avec le mouvement de translation), mais cette « exagération » permet en pratique de forcer une marche de l'exosquelette 1 bien plus naturelle. Par ailleurs, ces conditions peuvent paraître très restrictives, mais on constate en conditions réelles que la stabilité n'est pas du tout altérée, et la génération de trajectoire n'est pas complexifiée.

Comme l'on verra, on peut même définir ces première et deuxième partie dans des transitions, en particulier les transitions initiale et finale.

*Première et deuxième parties de trajectoire*

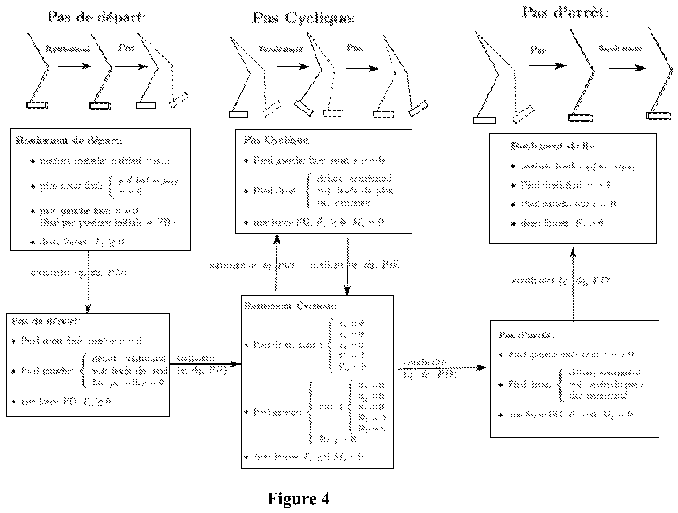

En référence à la **Figure 4,** on a représenté l'exemple préféré d'une transition initiale, puis un pas, et une transition finale. On va tout d'abord décrire le pas, i.e. la trajectoire périodique élémentaire, en commençant par la première partie (phase de roll). Dans l'exemple de la figure 4, le pied gauche (en pointillés - le pied droit est en trait plein)) est le pied avant. L'homme du métier pourra naturellement transposer l'exemple au cas de la figure

On se place ainsi dans la case « cyclic roll » qui définit la première partie d'une trajectoire périodique (« cyclique »). Les mouvements de chaque pieds sont définis sur un trièdre par trois vitesses selon les trois axes et trois rotations selon les trois axes. On voit qu'on impose :

- Pour le pied droit (arrière), continuité et $v_x=v_y=v_z=\Omega_r=\Omega_y=0$, seul $\Omega_x\neq0$ pour permettre la rotation pure ;
- Pour le pied gauche (avant), continuité et $v_x=v_y=v_z=\Omega_r=\Omega_y=0$, seul $\Omega_x\neq0$ pour permettre la rotation pure, et position de sortie p=0 c'est-à-dire pied à plat (position « nulle »).
- Chaque pied est soumis pendant le mouvement à une force verticale non nulle qui traduit la réaction du sol sur le pied.

Lorsque le pied avant atteint la position de sortie, on passe dans la case « cyclic step » pour la deuxième partie de la trajectoire périodique. On voit qu'on impose :

- Pour le pied gauche (avant), continuité et v=0, c'est-à-dire pure rotation.
- Pour le pied droit (arrière), continuité et « foot clearance », c'est dire décollement du pied
- Le pied droit est en l'air de sorte qu'il n'est soumis à aucune force.

On termine avec une « cyclicité », c'est-à-dire que la configuration complète de l'exosquelette 1 à la fin de cette deuxième partie doit être égale au symétrique de la configuration au début du cyclic roll (première partie), et on recommence le cyclic roll en inversant pied gauche (LF) et pied droit (RF).

Dans le cas de la figure 4, on suppose qu'on commence par une transition initiale à partir d'une posture de départ donnée (depuis une position immobile, debout, etc.). Comme expliqué on peut à nouveau avoir une première et une deuxième parties de cette transition, par analogie avec les première et deuxième partie d'une trajectoire périodique élémentaire. Il est ici supposé qu'on commence par un starting roll « avec le pied gauche derrière », mais il s'agit d'un choix arbitraire on pourra faire l'inverse, les deux pieds étant en pratique généralement cote à cote. Comme expliqué avant on impose une rotation pure des pieds, mais en pratique on peut même avoir des pieds qui restent immobiles à plat, seul le bassin se mettant en mouvement. L'idée est d'enclencher la dynamique du mouvement.

Ensuite, on enchaine par la deuxième partie de cette transition initiale (Starting step) dans laquelle le pied droit ne bouge pas (ou du moins ne fait qu'une rotation pure) et le pied gauche décolle jusqu'à atteindre à nouveau le sol : on peut alors débuter la trajectoire périodique et plus précisément la première partie (cyclic roll).

Similairement, la figure 4 illustre le cas d'une transition final suivant une première partie de trajectoire périodique. Par symétrie avec la transition initiale, on commence par la deuxième partie (stopping step) pour finir par la première partie (stopping roll). On note que la partie de stopping step est identique à la deuxième partie de la trajectoire périodique, avec un pied gauche fixe et un pied droit qui décolle (à nouveau c'est arbitraire, on pourra tout à fait faire l'inverse). La seule différence est que dans ce type de transition le mouvement calculé voit généralement le pied arrière n'aller que jusqu'au niveau du pied devant, et non au-delà comme dans une marche. Dans la partie de stopping roll on peut à nouveau avoir au mieux une rotation des pieds, l'exosquelette 1 vient s'immobiliser jusqu'à atteindre une posture finale (par exemple position immobile, debout, etc.).

*Procédés*

Selon un premier aspect, est proposé le procédé de génération de trajectoire d'une trajectoire d'un exosquelette 1, mis en oeuvre par les moyens de traitement de données 11a du serveur 10a. Ledit procédé de génération de trajectoire d'une trajectoire d'un exosquelette 1 commence par ladite étape (c) d'obtention d'au moins un n-uplet de paramètres de marche définissant une marche donnée de l'exosquelette 1, voire une séquence de n-uplets de paramètres de marche progressivement (par exemple du fait de nouvelles commandes de la part de l'opérateur de l'exosquelette).

Dans une étape (b) principale, le procédé comprend génération d'au moins une trajectoire élémentaire périodique de l'exosquelette 1 pour ledit n-uplet de paramètres de marche, comme expliqué telle que ladite trajectoire élémentaire périodique comprenne successivement une première partie de trajectoire et une deuxième partie de trajectoire, telle que dans la première partie de trajectoire chaque pied effectue une rotation pure, et dans la deuxième partie un seul pied effectue une translation (décollement du pied, l'autre faisant une pure rotation voire étant immobile)

Pour une séquence de n-uplets, pour chaque nouveau n-uplet de paramètres, on détermine une nouvelle trajectoire périodique et une transition vers cette nouvelle trajectoire périodique.

Pour cela, le procédé de génération d'une trajectoire comprend avantageusement la détermination (le cas échéant répétée de manière régulière) du n-uplet de paramètres de marche de l'exosquelette 1, i.e. la répétition de l'étape (a).

En effet, si l'exosquelette 1 est un exosquelette recevant un opérateur humain, c'est la posture dudit opérateur humain (et éventuellement des appuis boutons) qui détermine lesdits paramètres (contrairement au cas d'un robot normal qui peut directement recevoir une requête de démarrage comprenant une consigne de vitesse et/ou de direction de marche).

Pour cela, l'opérateur peut être muni comme expliqué d'un gilet de capteurs 15 permettant de détecter la configuration de son buste (orientation de celui-ci). La direction dans laquelle l'opérateur oriente son buste est celle dans laquelle il souhaite marcher et la vitesse est donnée par l'intensité avec laquelle il met son buste en avant (à quel point il se penche). La requête de démarrage peut correspondre à l'appui par l'opérateur sur un bouton (ou une posture particulière) signifiant son intention de se mettre en marche et donc ordonnant aux moyens de traitement de données de déterminer lesdits paramètres. Certains paramètres tels que l'angle de rotation instantané ou la hauteur des marches en cas de franchissement d'escaliers peuvent être prédéterminés ou obtenus au moyen d'autres capteurs 13, 14.

Pour la génération de la trajectoire à proprement parler, on ne sera limité à aucune technique connue, l'objet de l'invention étant seulement d'appliquer lors de la génération les contraintes susmentionnées de sorte à obtenir les première et deuxième parties.

On connait notamment comme expliqué des outils d'optimisation, capables notamment de générer une trajectoire donnée en fonction des contraintes et paramètres de marches choisis. Par exemple, dans le cas de trajectoires HZD, le problème de la génération de trajectoires est formulé sous la forme d'un problème de contrôle optimal qui peut être résolu de manière préférée par un algorithme dit de collocation directe, voir le document Omar Harib et al., Feedback Control of an Exoskeleton for Paraplégies Toward Robustly Stable Hands-free Dynamic Walking.

On pourra alternativement comme expliqué également utiliser un réseau de neurones entraîné sur une base de données de trajectoires d'apprentissage.

A noter qu'on peut envisager utiliser un premier réseau de neurones pour générer la première partie d'une trajectoire, et un deuxième réseau de neurones pour générer la deuxième partie d'une trajectoire. Il suffit ainsi d'apprendre le premier réseau sur une base d'apprentissage de premières parties de trajectoires, et le deuxième réseau sur une base d'apprentissage de deuxièmes parties de trajectoires.

Selon un deuxième aspect, est proposé un procédé de mise en mouvement d'un exosquelette 1 comprenant la mise en oeuvre dudit procédé selon le deuxième aspect de génération d'une trajectoire de l'exosquelette (étape (a), (b)), puis (dans une étape qu'on note (c)) l'exécution de ladite trajectoire de sorte à ce que l'exosquelette 1 marche.

Les étapes (b) et (c) peuvent être répétées de sorte à corriger la trajectoire de l'exosquelette 1 toujours en temps réel.

*Equipements et système*

Selon un troisième aspect, l'invention concerne le système, pour la mise en oeuvre des procédés selon le premier et/ou le deuxième aspect.

Comme expliqué, ce système comprend un premier serveur 10a, un éventuel deuxième serveur 10b et un exosquelette 1, possiblement confondus.

Le premier serveur 10a comprend des moyens de traitement de données 11a pour la mise en oeuvre du procédé selon le premier aspect.

L'exosquelette 1 comprend des moyens de traitement de données 11c configurés pour la mise en oeuvre du procédé selon le deuxième aspect, ainsi que si nécessaire des moyens de stockage de données 12 (en particulier ceux du premier serveur 10a), des moyens de mesure inertielle 14 (centrale à inertie), des moyens pour détecter l'impact des pieds au sol 13 (capteurs de contact ou éventuellement capteurs de pression), et/ou un gilet de capteurs 15.

Il présente une pluralité de degrés de liberté dont au moins un degré de liberté actionné par un actionneur commandé par les moyens de traitement de données 11c dans le cadre de la mise en oeuvre du procédé selon le troisième aspect.

*Produit programme d'ordinateur*

Selon un quatrième et un cinquième aspects, l'invention concerne un produit programme d'ordinateur comprenant des instructions de code pour l'exécution (sur les moyens de traitement 11a, 11c), d'un procédé selon le premier aspect de génération d'une trajectoire d'un exosquelette 1 et/ou d'un procédé selon le deuxième aspect de mise en mouvement d'un exosquelette 1, ainsi que des moyens de stockage lisibles par un équipement informatique sur lequel on trouve ce produit programme d'ordinateur.

**Revendications**

1. Procédé de génération d'une trajectoire d'un exosquelette (1) pourvu de deux jambes chacune munie d'un pied, le procédé comprenant la mise en oeuvre par des moyens de traitement de données (11a) d'un serveur (10a), d'étapes de :

   (a) obtention d'au moins un n-uplet de paramètres de marche définissant une marche donnée de l'exosquelette (1) ;
   (b) génération d'au moins une trajectoire élémentaire périodique de l'exosquelette (1) pour ledit n-uplet de paramètres de marche, telle que ladite trajectoire élémentaire périodique comprend successivement une première partie de trajectoire et une deuxième partie de trajectoire, telle que dans la première partie de trajectoire chaque pied effectue une rotation pure, et dans la deuxième partie un seul pied effectue une translation.

2. Procédé selon la revendication 1, dans lequel ladite trajectoire périodique élémentaire répète cycliquement la succession desdites première partie de trajectoire puis deuxième partie de trajectoire.

3. Procédé selon l'une des revendications 1 et 2, dans lequel, dans la deuxième partie de trajectoire, le pied qui effectue la translation est le pied initialement arrière, le pied initialement avant effectuant une rotation pure.

4. Procédé selon la revendication 3, dans lequel ledit pied initialement avant reste immobile pendant la deuxième partie de trajectoire.

5. Procédé selon l'une des revendications 1 à 4, dans lequel à l'issue de première partie de trajectoire le pied avant est à plat au sol.

6. Procédé selon l'une des revendications 1 à 5, dans lequel l'étape (b) est mise en oeuvre en utilisant au moins un réseau de neurones.

7. Procédé selon l'une des revendication 1 à 6, ledit exosquelette (1) recevant un opérateur humain, l'étape (a) comprenant la détermination d'une séquence de n-uplets de paramètres de marche de l'exosquelette (1) souhaitée par ledit opérateur.

8. Procédé selon la revendication 7, dans lequel la trajectoire générée de l'exosquelette (1) comprend pour chaque n-uplet de ladite séquence une nouvelle trajectoire périodique élémentaire et une transition vers cette nouvelle trajectoire périodique élémentaire.

9. Procédé de mise en mouvement d'un exosquelette (1) présentant une pluralité de degrés de liberté dont au moins un degré de liberté actionné par un actionneur commandé par des moyens de traitement de données (11c) comprenant une étape (c) d'exécution par les moyens de traitement de données (11c) de l'exosquelette (1) d'une trajectoire de l'exosquelette (1) générée au moyen du procédé de génération d'une trajectoire de l'exosquelette (1) selon l'une des revendications 1 à 8, de sorte à faire marcher ledit exosquelette (1).

10. Système comprenant un premier serveur (10a) et un exosquelette (1) comprenant chacun des moyens de traitement de données (1 1a, 11c), **caractérisé en ce que** lesdits moyens de traitement de données (11a, 11c) sont configurés pour mettre en oeuvre un procédé selon l'une des revendications 1 à 8 de génération d'une trajectoire de l'exosquelette (1) et/ou un procédé selon la revendication 9 de mise en mouvement d'un exosquelette (1).

11. Produit programme d'ordinateur comprenant des instructions de code pour l'exécution d'un procédé selon l'une des revendications 1 à 8 de génération d'une trajectoire de l'exosquelette (1) et/ou un procédé selon la revendication 9 de mise en mouvement d'un exosquelette (1), lorsque ledit programme est exécuté sur un ordinateur.

12. Moyen de stockage lisible par un équipement informatique sur lequel est enregistré un produit programme d'ordinateur comprenant des instructions de code pour l'exécution d'un procédé selon l'une des revendications 1 à 8 de génération d'une trajectoire de l'exosquelette (1) et/ou un procédé selon la revendication 9 de mise en mouvement d'un exosquelette (1).

**Patentansprüche**

1. Verfahren zur Erzeugung einer Trajektorie eines Exoskeletts (1), das mit zwei Beinen versehen ist, jedes mit einem Fuß, wobei das Verfahren durch Datenverarbeitungsmittel (11a) eines Servers (10a) die Durchführung der folgenden Schritte umfasst:

   (a) Erhalten von mindestens einem Gangparametertupel, das einen bestimmten Gang des Exoskeletts (1) definiert;
   (b) Erzeugen von mindestens einer periodischen elementaren Trajektorie des Exoskeletts (1) für das Gangparametertupel derart, dass die periodische elementare Trajektorie aufeinanderfolgend einen ersten Trajektorieteil und einen zweiten Trajektorieteil derart umfasst, dass im ersten Trajektorieteil jeder Fuß eine reine Rotation durchführt und im zweiten Teil ein einziger Fuß eine Translation durchführt.

**2.** Verfahren nach Anspruch 1, wobei die periodische elementare Trajektorie die Abfolge des ersten Trajektorieteils, dann des zweiten Trajektorieteils zyklisch wiederholt.

**3.** Verfahren nach einem der Ansprüche 1 und 2, wobei im zweiten Trajektorieteil der Fuß, der die Translation durchführt, der anfänglich hintere Fuß ist, wobei der anfänglich vordere Fuß eine reine Rotation durchführt.

**4.** Verfahren nach Anspruch 3, wobei der anfänglich vordere Fuß während des zweiten Trajektorieteils unbewegt bleibt.

**5.** Verfahren nach einem der Ansprüche 1 bis 4, wobei nach Abschluss des ersten Trajektorieteils der vordere Fuß flach auf dem Boden aufsteht.

**6.** Verfahren nach einem der Ansprüche 1 bis 5, wobei der Schritt (b) durch Verwendung von mindestens einem neuronalen Netzwerk durchgeführt wird.

**7.** Verfahren nach einem der Ansprüche 1 bis 6, wobei das Exoskeletts (1) einen menschlichen Bediener aufnimmt, wobei der Schritt (a) die Bestimmung einer von dem Bediener gewünschten Gangparametertupelsequenz des Exoskeletts (1) umfasst.

**8.** Verfahren nach Anspruch 7, wobei die erzeugte Trajektorie des Exoskeletts (1) für jedes Tupel der Sequenz eine neue periodische elementare Trajektorie und eine Transition zu dieser neuen periodischen elementaren Trajektorie umfasst.

**9.** Verfahren zum Inbewegungversetzen eines Exoskeletts (1), das eine Vielzahl von Freiheitsgraden aufweist, von denen mindestens ein von einem von Datenverarbeitungsmitteln (11c) gesteuerter Aktuator betätigter Freiheitsgrad einen Schritt (c) der Ausführung, durch die Datenverarbeitungsmittel (11c) des Exoskeletts (1), einer Trajektorie des Exoskeletts (1) umfasst, die mittels des Verfahrens zur Erzeugung einer Trajektorie des Exoskeletts (1) nach einem der Ansprüche 1 bis 8 derart erzeugt wird, dass das Exoskelett (1) geht.

**10.** System, umfassend einen ersten Server (10a) und ein Exoskelett (1), die beide Datenverarbeitungsmittel (11a, 11c) umfassen, **dadurch gekennzeichnet, dass** die Datenverarbeitungsmittel (11a, 11c) dazu ausgelegt sind, ein Verfahren nach einem der Ansprüche 1 bis 8 zur Erzeugung einer Trajektorie des Exoskeletts (1) und/oder ein Verfahren nach Anspruch 9 zum Inbewegungversetzen eines Exoskeletts (1) durchzuführen.

**11.** Rechnerprogrammprodukt, umfassend Codebefehle für die Ausführung eines Verfahrens nach einem der Ansprüche 1 bis 8 zur Erzeugung einer Trajektorie des Exoskeletts (1) und/oder eines Verfahrens nach Anspruch 9 zum Inbewegungversetzen eines Exoskeletts (1), wenn das Programm auf einem Rechner ausgeführt wird.

**12.** Von einer IT-Ausrüstung lesbares Speichermedium, auf dem ein Rechnerprogrammprodukt gespeichert ist, das Codebefehle für die Ausführung eines Verfahrens nach einem der Ansprüche 1 bis 8 zur Erzeugung einer Trajektorie des Exoskeletts (1) und/oder eines Verfahrens nach Anspruch 9 zum Inbewegungversetzen eines Exoskeletts (1) umfasst.

## Claims

**1.** Method for generating a trajectory of an exoskeleton (1) provided with two legs each having a foot, the method comprising the implementation by data-processing means (11a) of a server (10a), of steps of:

(a) obtaining at least one n-tuple of gait parameters defining a given gait of the exoskeleton (1);
(b) generating at least one periodic elementary trajectory of the exoskeleton (1) for said n-tuple of gait parameters, such that said periodic elementary trajectory comprises in sequence a first trajectory portion and a second trajectory portion, such that in the first trajectory portion each foot performs a pure rotation, and in the second portion only one foot performs a translation.

**2.** Method according to claim 1, wherein said elementary periodic trajectory cyclically repeats the sequence of said first trajectory portion then second trajectory portion.

**3.** Method according to one of claims 1 and 2, wherein, in the second trajectory portion, the foot that performs the translation is the initially rear foot, the initially front foot performing a pure rotation.

**4.** Method according to claim 3, wherein said initially front foot remains immobile during the second trajectory portion.

**5.** Method according to one of claims 1 to 4, wherein at the end of the first trajectory portion the front foot is flat on the ground.

**6.** Method according to one of claims 1 to 5, wherein the step (b) is implemented by using at least one neural network.

7. Method according to one of claims 1 to 6, said exoskeleton (1) receiving a human operator, the step (a) comprising the determining of a sequence of n-tuples of gait parameters of the exoskeleton (1) desired by said operator.

8. Method according to claim 7, wherein the generated trajectory of the exoskeleton (1) comprises for each n-tuple of said sequence a new elementary periodic trajectory and a transition to this new elementary periodic trajectory.

9. Method for setting an exoskeleton in motion (1) having a plurality of degrees of freedom of which at least one degree of freedom actuated by an actuator controlled by data-processing means (11c) comprising a step (c) of executing by the data-processing means (11c) of the exoskeleton (1) of a trajectory of the exoskeleton (1) generated by means of the method for generating a trajectory of the exoskeleton (1) according to one of claims 1 to 8, in such a way as to cause said exoskeleton (1) to walk.

10. System comprising a first server (10a) and an exoskeleton (1) each comprising data-processing means (11a, 11c), **characterised in that** said data-processing means (11a, 11c) are configured to implement a method according to one of claims 1 to 8 for generating a trajectory of the exoskeleton (1) and/or a method according to claim 9 for setting an exoskeleton (1) in motion.

11. Computer program product comprising code instructions for the execution of a method according to one of claims 1 to 8 for generating a trajectory of the exoskeleton (1) and/or a method according to claim 9 for setting an exoskeleton (1) in motion, when said program is executed on a computer.

12. Means of storage that can be read by a piece of computer equipment whereon a computer program product is recorded comprising code instructions for the execution of a method according to one of claims 1 to 8 for generating a trajectory of the exoskeleton (1) and/or a method according to claim 9 for setting an exoskeleton (1) in motion.

CONTACT　　BAS　　PASS POS　　HAUT　　CONTACT

CONTACT　　　　　　　　　　　　　　　　CONTACT

**Figure 1**

**Figure 2**

**Figure 3**

**Figure 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7153242 B, Rewalk
- US 2016038371 A
- WO 2010027968 A2
- EP 2231096 A
- WO 2015140353 A
- WO 2018130784 A
- WO 2015140352 A
- FR 1910649

**Littérature non-brevet citée dans la description**

- **KAJITA S., K. F.** Biped Walking pattern génération by using preview control of Zero-Moment Point. *ICRA,* 2003, 1620-1626
- **OMAR HARIB et al.** *Feedback Control of an Exoskeleton for Paraplégies Toward Robustly Stable Hands-free Dynamic Walking*